# EUROPÄISCHE PATENTSCHRIFT

(11) **EP 2 055 742 B1**
(45) Veröffentlichungstag und Bekanntmachung des Hinweises auf die Patenterteilung: **22.12.2010**
(21) Anmeldenummer: 07119561.4
(22) Anmeldetag: 30.10.2007
(51) Int. Cl.: C08L 77/00, F22D 3/00

(54) **Polyamid-Formmassen, insbesondere zur Herstellung von Formteilen im Trinkwasserbereich**
Polyamide moulding compositions, in particular for manufacturing moulded parts in the field of drinking water supplies
Masses à mouler à base de polyamide, en particulier pour la fabrication de pièces moulées dans le domaine d'alimentation en eau potable

(43) Veröffentlichungstag der Anmeldung: 06.05.2009
(73) Patentinhaber: EMS-PATENT AG, 7013 Domat/Ems (CH)
(72) Erfinder: Stöppelmann, Georg, 7402 Bonaduz (CH)
(74) Vertreter: Bremi, Tobias Hans

(56) Entgegenhaltungen:
- EP-A- 1 369 447
- WO-A-2007/074086
- WO-A-2007/087896
- US-B1- 6 511 724

## Beschreibung

### TECHNISCHES GEBIET

Die vorliegende Erfindung betrifft eine Polyamid-basierte Formmasse insbesondere zur Verwendung im Trinkwasserbereich, das heisst zur Herstellung von Formteilen, bei welchen beim bestimmungsgemässem Gebrauch die verarbeitete Formmasse in Kontakt mit Trinkwasser tritt.

### STAND DER TECHNIK

Trinkwasser als unser wichtigstes Lebensmittel darf bis zur Entnahmestelle des Verbrauchers keine unzulässigen Qualitätseinbussen erleiden. Dementsprechend kommt den Werkstoffen in der Trinkwasserinstallation (Bedarfsgegenstände) eine besondere Bedeutung zu. Nach DIN 1988 müssen alle Anlagenteile so beschaffen sein, dass das Trinkwasser in seiner Lebensmittelqualität nicht unzulässig beeinträchtigt wird.

Die Arbeitsgruppe "Trinkwasserbelange" der Kunststoffkommission des Bundesgesundheitsamtes (BGA) befasst sich mit der gesundheitlichen Beurteilung von Bedarfgegenständen aus Kunststoffen und anderen nichtmetallischen Werkstoffen, die im Trinkwasserbereich Verwendung finden sollen. Als Beurteilungsgrundlage dienen die Empfehlungen des BGA für Kunststoffe im Lebensmittelverkehr. Das Ergebnis dieser Arbeit liefert die Grundlage für "Empfehlungen von Kunststoffen und anderen nichtmetallischen Werkstoffen, die im Trinkwasser angewendet werden können (Kunststoff Trinkwasser-Empfehlungen oder kurz KTW-Empfehlungen). Sie entsprechen jeweils dem Stand der Wissenschaft und Technik.

Wenn die Ausgangsstoffe Gegenstand einer KTW-Empfehlung sind und die Fabrikationshilfs- und Zusatzstoffe in Art, Menge und Reinheit den dort aufgeführten Anforderungen entsprechen, ist die Einhaltung der Grund- und Zusatzanforderungen an dem Fertigprodukt (Formteil) nachzuweisen.

Konkret beschreibt die Leitlinie zur hygienischen Beurteilung von organischen Materialien in Kontakt mit Trinkwasser (KTW-Leitlinie, Stand: 16.05.2007) als Konkretisierung des Warmwassertests bei (60 ± 2) °C und des Heisswassertests bei (85 ± 2) °C (Durchführung des Migrationstests entsprechend DIN EN 12873-1: 2004 und - 2: 2005) folgendes Verfahren, welches für die vorliegende Erfindung ein wesentliches Charakterisierungsmerkmal ist:
a) Es erfolgt keine Desinfektionsvorbehandlung (Hochchlorung) der Prüfkörper vor der Prüfung.
b) Die Vorbehandlung erfolgt in der Reihenfolge:
   - 1 h Spülen mit Leitungswasser,
   - 24 h Stagnation mit Versuchswasser bei der Prüftemperatur ((60 ± 2)°C oder (85± 2)°C),
   - 1 h Spülen mit Leitungswasser, - Abspülen mit Versuchswasser
c) Als Versuchswasser wird Wasser entsprechend 5.1.2 DIN EN 12873-1 verwendet.
d) Es werden mindestens zwei identische Kontaktversuche und zwei Blindversuche gleichzeitig durchgeführt.
e) Die Prüfung von Rohren mit einem Innendurchmesser < 80 mm erfolgt durch Befüllen. Rohre mit einem Innendurchmesser 80 DN < 300 mm werden durch Einstellen eines Glaszylinders bei einem O/V-Verhältnis (Oberflächen/Volumen-Verhältnis, wobei O die Oberfläche des Prüfkörpers und V das Volumen des Prüfwassers ist) von ca. 5 dm⁻¹ geprüft. Rohre mit einem Innendurchmesser 300 mm können durch Einstellen eines Glaszylinders oder durch Füllen von Rohrsegmenten bei einem O/V-Verhältnis von 5 dm⁻¹ geprüft werden. Behälterbeschichtungen werden als beschichtete Platten bei einem O/V-Verhältnis von ca. 5 dm⁻¹ geprüft. Ausrüstungsgegenstände und Dichtungen werden durch Eintauchen der Produkte bei einem O/V-Verhältnis von ca. 5 dm⁻¹ geprüft.
f) Wenn bei Rohren, Ausrüstungsgegenständen und Dichtungen kein Unterschied in der Materialzusammensetzung und im Produktionsprozess besteht, reicht die Prüfung am geringsten Durchmesser einer Produktreihe.
g) Das Befüllen bzw. Eintauchen der Probekörper erfolgt mit bzw. im Versuchswasser bei der Prüftemperatur. Die Prüfansätze sollen in einem Wärmeschrank oder Thermostaten auf dieser Temperatur gehalten werden.
h) Der Vorbehandlung folgen 7 Migrationsperioden bei der Prüftemperatur (vgl. Anlage 2 der Richtlinie: Schema zur Durchführung der Migrationsprüfungen bei erhöhten Temperaturen). Die Prüfwässer der ersten drei und der letzten zwei Prüfperioden mit je 24 Stunden Kontaktzeit werden für die weiteren Untersuchungen verwendet.
i) Der TOC (total organic carbon) wird als NPOC (Nonpurgeable organic carbon) nach DIN EN 1484 in den 5 Migrationsproben bestimmt.
j) Die spezifische Migration von Einzelstoffen wird in den Migrationsproben der 1., 6. und 7. Periode bestimmt.

Eine wichtige Zusatzanforderung ist dabei sogenannte "Kohlenstoff-Abgabe" (Migrationsrate) im Kontakt mit dem Trinkwasser. Der Richtwert bei der 7. Extraktion von 12.5 mg C/m²d darf dabei nicht überschritten werden. Die der Migrationsrate zugrundeliegende Kohlenstoff-Konzentration, die hierbei bestimmt wird, entspricht der Gesamtkonzentration an gelöstem organischem Kohlenstoff (total organic carbon oder kurz TOC) nach dem siebenten Extraktionszyklus.

In der Regel steigt die extrahierbare Stoffmenge und damit der TOC-Wert mit zunehmender Temperatur, so dass bei gleichem polymerem Werkstoff unterschiedliche Extraktwerte bei 23°C (kalten Wasser), 60°C (warmes Wasser) und 85°C (heisses Wasser) erzielt werden. So haben einige Kunststoffe tiefe, KTW-konforme TOC-Werte bei Raumtemperatur, aber hohe TOC-Werte bei 60 oder 85°C, so dass sie nicht für den Warm- und Heisswasserbereich zugelassen werden.

Die US 2005/67514 A1 beschreibt ein Wellrohr, das u.a. auch aus Polyamid bestehen kann, und für die Trinkwasserversorgung verwendet werden soll.

Die DE 19945106 A1 beschreibt einen Druckbehälter, der auch in Trinkwasseranlagen installiert werden kann. Der Behälter wird aus Polyamid im sogenannten Schleudergussverfahren gefertigt. Beispielhaft wird PA6 genannt.

Die US 6511724 beschreibt eine mehrschichtige Kunststoffleitung für die Trinkwasserversorgung, wobei die innere Schicht aus PE und die äussere Schicht aus PA12 besteht. Die PA12-Schicht soll das Eindiffundieren von Kohlenwasserstoffen aus dem Erdreich in das Trinkwasser verhindern. Dass man auf die PE-Innenschicht nicht verzichten kann (oder will) legt nahe, dass PA12 nicht für die Trinkwasserversorgung geeignet ist.

### DARSTELLUNG DER ERFINDUNG

Der Erfindung liegt demnach die Aufgabe zugrunde, eine verbesserte Formmasse zur Herstellung eines Formkörper für Trinkwasser zur Verfügung zu stellen, insbesondere eine verbesserte Formmasse, welche auch für Trinkwasser hoher Temperatur zugelassen werden kann.

Die Lösung dieser Aufgabe wird dadurch erreicht, dass eine Polyamidformmasse aus den folgenden Bestandteilen bereitgestellt wird:
(A) 25-70 Gew.-% aliphatisches Polyamid, ausgewählt aus der Gruppe PA1010, PA1012, PA1014, PA1210, PA1212, PA1214, PA12, PA11 oder eine Mischung zweier oder mehrerer dieser Systeme ;
(B) 8-35 Gew.-% transparentes Polyamid, ausgewählt aus der Gruppe MACM9-36, MACM9-36/PACM9-36, MACMI/12, MACMI/MACMT/12 oder eine Mischung zweier oder mehrerer dieser Systeme;
(C) 10-60 Gew.-% Verstärkungsstoffe;
(D) 0 - 30 Gew.-% teilchen- und/oder schichtförmige Füllstoffe;
(E) 0 - 3 Gew.-% Hilfsstoffe und/oder Additive
wobei die Summe der Komponenten (A)-(E) 100 Gew.-% ausmacht, und wobei wenigstens teilweise als Verstärkungsstoffe (C) Fasern eingesetzt sind, deren Querschnittsfläche entweder kreisförmig ist oder aber bei welchen das Abmessungsverhältnis von der Haupt-Querschnittsachse zur Neben-Querschnittsachse unterhalb von 2 liegt.

Ein wesentliches Element der Erfindung besteht somit u.a. darin, erkannt zu haben, dass die vorgeschlagene spezifische Mischung unerwarteter Weise tatsächlich für hohe Temperaturen einen sehr niedrigen TOC-Wert aufweisen kann und bei den angegebenen Verstärkungsgraden (Anteil von der Komponente C) immer noch gut verarbeitet werden kann, obwohl vergleichsweise unflexible Fasern (im wesentlichen runder oder nahezu runder Querschnitt) eingesetzt werden.

Bevorzugt handelt es sich bei der Komponente (A) um PA11 oder PA12, ganz besonders bevorzugt ist PA12.

Bevorzugt handelt es sich bei der Komponente (B) um MACM12, MACM14, MACM16, MACM18, MACMI/12 oder MACMI/MACMT/12 oder um eine Mischung zweier oder mehrerer dieser Systeme.

An sich sind, wenn auch im Zusammenhang mit völlig anderen Anwendungen, Mischungen (Blends) aus verschiedenen Polyamiden aus dem Stand der Technik selbstverständlich bekannt.

So beschreibt beispielsweise die DE 3200428 C2 eine glasfaserverstärkte Formmasse auf Basis teilkristalliner Polyamide, die 5 - 20 Gew.-% bezogen auf die Gesamtformmasse, wenigstens eines amorphen transparenten Polyamids enthalten. In der Beschreibung und den Beispielen werden lediglich PA6 und PA66 als teilkristalline Polyamide aufgeführt. Die amorphen Polyamide basieren auf TPS und Trimethylhexamethylendiamin oder IPS und HMDA oder Laurinlactam, IPS und MACM. Ziel ist die Verbesserung der Oberflächenqualität von verstärkten Formteilen, und als Verwendung wird nur ganz allgemein ausgeführt, dass im Spritzgussverfahren hergestellte Teile eine optisch gute Oberfläche aufweisen sollen. Einen Hinweis auf die Eignung für den Trinkwasserbereich, gibt es nicht.

Die DE 60209862 T2 beschreibt eine transparente Zusammensetzung enthaltend 5 - 40 Gew.-% eines amorphen Polyamids, 60 - 95 Gew.-% eines teilkristallinen Polyamids und gegebenenfalls Polyamid-Elastomere, Verträglichkeitsvermittler und flexible Modifizierungsmittel. In einer bevorzugten Ausführungsform ist das teilkristalline Polyamid PA12 genannt und das amorphe Polyamid basiert auf dem cycloaliphatischen Diamin Isophorondiamin. Da die beanspruchten Gegenstände transparent sein sollen, werden Glasfasern nicht als mögliche Komponente genannt. Das Dokument betrifft Materialien für Skibeläge, es gibt keine Hinweise auf die Eignung solcher Formteile im Trinkwasserbereich oder die Realisierung eines tiefen TOC-Wertes.

Die DE 10009756 B4 beschreibt farblose, transparente Blends mit verbesserter Spannungsrissbeständigkeit, die neben den Blendkomponenten mindestens eine Phosphorverbindung enthalten. Die Polymermischung besteht aus 1 - 99 % eines transparenten Polyamids (A) und 99 - 1 % eines teilkristallinen Polyamids (B). In einem bevorzugten Zusammensetzungsbereich werden 10 - 90 % des Polyamids A und 90 - 10 % des Polyamids B gemischt. Übliche Füll- und Verstärkungsstoffe können der Mischung zugesetzt werden. Die Verwendung im Trinkwasserbereich wird nicht genannt. Die in den Beispielen aufgeführten Mischungen enthalten lediglich 30 Gew.-% teilkristallines Polyamid.

Die EP 0 523 445 beschreibt Blends, welche 25 - 75 Gew.-% teilkristallines Polyamid und 75 - 25 Gew.-% amorphes Polyamid enthalten, welches zwingend dimerisierte Fettsäure als Monomer enthält. Neben optionalen Additiven können auch übliche Füll- und Verstärkungsstoffe in der Formmasse enthalten sein. PA12 als teilkristallines Polyamid wird nicht genannt, ebenso wenig die Verwendung im Trinkwasserbereich.

Die EP 0 408 390 betrifft einen thermoformbaren Film auf Basis teilkristalliner und amorpher Polyamide, wobei die Mischungen 5 - 15 % amorphe Polyamide, bevorzugt des Typs PA 6T/6I enthalten. PA12 wird nicht als teilkristallines Polyamid vorgeschlagen.

Die US 2003/0125481 A1 beschreibt verstärkte Polyamid-Formmassen, erhalten durch Schmelzemischen von teilkristallinen und semi-aromatischen amorphen Polyamiden und anorganischen Verstärkungsstoffen. Die Kristallisationstemperatur der Mischung soll unter 180°C liegen. Die aromatischen Struktureinheiten im amorphen Polyamid rühren von folgenden Monomeren her: IPS, TPS, MXD. Es wird vorgeschlagen, die Formmasse zur Herstellung von Aussenteilen im Automobilbereich, insbesondere für Rückspiegelgehäuse, zu verwenden.

Die US 5250604 beschreibt, wie die Kombination von guten mechanischen Eigenschaften und guter Oberflächenqualität von verstärkten Polyamidformassen, insbesondere bei Aufnahme von Wasser, erreicht wird durch eine polymere Matrix bestehend aus einer Mischung eines aliphatischen, teilkristallinen Polyamids, eines aliphatischen, teilkristallinen Copolyamids sowie eines amorphen Polyamids.

Keines dieser Dokumente beschreibt eine Polyamidformmasse mit der beanspruchten Zusammensetzung, geschweige denn die Eignung einer solchen Polyamidformmasse für den Bereich von Formteilen im Trinkwasserbereich, und die völlig anders gelagerten Verwendungen in diesen Dokumenten können eine solche Eignung auch nicht nahe legen. Insbesondere können sie den Fachmann nicht vermuten lassen, dass eine solche Formmasse die für derartige Anwendungen hervorragend niedrigen TOC Werte zu erreichen in der Lage ist.

PA12 als Beispiel für die Komponente (A) allein erfüllt die Zusatzanforderung hinsichtlich des TOC-Wertes für kaltes und warmes, aber nicht für heisses Wasser. Erst durch den Zusatz von amorphen oder mikrokristallinen Polyamiden bevorzugtermassen im Konzentrationsbereich von 15 - 35 oder 15-30 Gew.-% kann der TOC so weit abgesenkt werden, dass der geforderte Richtwert erreicht oder unterschritten wird. Die verwendeten amorphen oder mikrokristallinen (gemeinsam ist diesen die Transparenz) Polyamide der Komponente (B) selbst haben einen tiefen TOC-Wert. Die erzielte TOC Reduktion überschreitet im gewählten Konzentrationsbereich signifikant die sich theoretisch aus dem Mischungsverhältnis der Komponenten ergebenden Werte. Damit ergibt sich überraschend, dass Mischungen aus PA12 und transparenten Polyamiden insbesondere im Zusammensetzungsbereich von 62 - 85% (A) / 38 - 15% (B) die Anforderungen für den Kontakt auch mit heissem Trinkwasser erfüllen.

Interessanterweise übt der Glasfasergehalt verstärkter Formmassen nur einen geringen Einfluss auf den TOC der einzelnen Extraktionsstufen aus. D.h. es ist nicht möglich durch Zusatz von z.B. 50 Gew.-% Glasfasern (Komponente C) den TOC-Wert zu halbieren. Vielmehr wird beobachtet, dass die unverstärkte und verstärkte Formmasse nahezu identische TOC-Werte oder dass sogar die verstärkten Formmassen die höheren TOC-Werte aufweisen.

Blends generell aus aliphatischen, teilkristallinen Polyamiden und transparenten Polyamiden sind, wie oben diskutiert, bereits weitgehend Stand der Technik. Bislang wurde aber nicht gezeigt oder suggeriert, dass eine Mischung aus den Komponenten der spezifisch ausgewählten Systeme für A und B mit dem Verstärkungsstoff C im oben angegebenen Mischungsverhältnis zu Formmassen mit deutlich reduziertem TOC führen. Auch wird die Verwendung solcher Formmassen im Trinkwasserbereich bisher nicht einmal erwähnt. Es existieren auch keine bekannten Trinkwasserzulassungen für solche Blends.

Die Verstärkung (Komponente C) kann mit Kurzfasern (z.B. Schnittglas mit einer Länge von 2 - 50 mm) oder Endlosfasern (Langglas oder Rovings) erfolgen.

Die erfindungsgemäss als Roving (Füllstoffkomponente C) eingesetzten Glasfasern weisen einen Durchmesser von 10 bis 20 µm, bevorzugt von 12 bis 17 µm auf. Unter dem allgemein verwendeten Begriff Durchmesser ist bei Fasern mit nicht kreisförmigem, d.h. anisotropem Querschnitt, d.h. mit einer längeren Haupt-Querschnittsachse als Neben-Querschnittsachse im Weiteren die Länge der Haupt-Querschnittsachse zu verstehen. Insbesondere werden erfindungsgemäss E-Glasfasern verwendet. Es können aber auch alle anderen Glasfasersorten, wie z.B. A-, C-, D-, M, S-, R-Glasfasern oder beliebige Mischungen davon oder Mischungen mit E-Glasfasern eingesetzt werden.

Bei langfaserverstärkten Formmassen ergeben sich höhere Zähigkeiten und somit noch metallähnlichere Eigenschaften, wenn anstatt der üblichen Endlosglasfaser mit einem Durchmesser von 15 bis 19 µm, solche mit einem Durchmesser von 10 bis 14 µm, insbesondere solche mit einem Durchmesser von 10 bis 12 µm verwendet werden.

Wie erwähnt werden nach der Erfindung (Glas-)Fasern eingesetzt, deren Querschnittsfläche entweder kreisförmig ist oder aber bei welchen das Abmessungsverhältnis von der Haupt-Querschnittsachse zur Neben-Querschnittsachse unterhalb von 2 liegt. Ausdrücklich ausgeschlossen sind mit anderen Worten Glasfasern respektive generell Fasern, deren Achsenverhältnis der Querschnittsfläche grösser oder gleich 2 ist.

In einer bevorzugten Ausführungsform sind die erfindungsgemäss eingesetzten Glasfasern Kurzglasfasern mit einem Durchmesser im Bereich von 7 bis 20, bevorzugt 9 bis 12 µm. Die Glasfasern liegen in Form von Schnittglas mit einer Länge von 2 bis 50 mm vor. Insbesondere werden erfindungsgemäss E- und/oder S-Glasfasern verwendet. Es können aber auch alle anderen Glasfasersorten, wie z. B. A-, C-, D-, M-, R-Glasfasern oder beliebige Mischungen davon oder Mischungen mit E- und/oder S-Glasfasern eingesetzt werden. Es werden die für Polyamid üblichen Schlichten, wie z. B. diverse Aminosilanschlichten, verwendet, wobei hochtemperaturstabile Schlichten bevorzugt werden.

In einer weiteren bevorzugten Ausführungsform sind die eingesetzten Glasfasern Langglasfasern. Die erfindungsgemäss als Roving eingesetzten Glasfasern weisen einen Durchmesser von 10 bis 20 µm, bevorzugt von 12 bis 17 µm auf. Insbesondere werden erfindungsgemäss E-Glasfasern verwendet. Neben den bevorzugten E-Glasfasern, werden insbesondere S-Glasfasern eingesetzt, da sie gegenüber den E-Glasfasern eine um 30% höhere Zugfestigkeit besitzen. Es können aber auch alle anderen Glasfasersorten, wie z.B. A-, C-, D-, M, R-Glasfasern oder beliebige Mischungen davon oder Mischungen mit E- und/oder S-Glasfasern eingesetzt werden.

Die erfindungsgemässen Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschliessend abgekühlt und geschnitten wird.

Die beim Pultrusionsverfahren eingesetzten Endlos-Kohlefasern weisen einen Durchmesser von 5 bis 10 µm, bevorzugt 6 bis 8 µm auf.

Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden, wobei besonders gute Eigenschaften des Formteils mit schonenden Verarbeitungsverfahren erreicht werden. In diesem Zusammenhang bedeutet schonend vor allem, dass ein übermässiger Faserbruch und die damit einhergehende starke Reduktion der Faserlänge weitgehend vermieden wird. Beim Spritzguss bedeutet dies, dass Schnecken mit grossem Durchmesser verwendet werden sollten.

Bevorzugtermassen ist die Komponente (C) wesentlich, bevorzugtermassen im wesentlichen vollständig aus Faser ausgewählt aus der Gruppe: Glasfasern, Kohlenstofffasern, Borfasern, Aramidfasern, Basaltfasern respektive Mischungen davon, gebildet.

Untersuchungen haben gezeigt, dass verschiedene Glasfaser-Typen ganz unterschiedlich zum gemessenen TOC-Wert der Formmasse beitragen. Zum anderen weisen unverstärkte Formmassen tendenziell niedrigere TOC-Werte im Vergleich zu den mit Glasfaser verstärkten Formmassen mit ansonsten gleicher Matrix-Zusammensetzung auf. Somit liegt es nahe, den Glasfasern (GF) einen eigenen TOC-Wert (GF-TOC) beizumessen. Der GF-TOC wurde in der Weise bestimmt, dass an Stelle der Polyamidplatte die Glasfasern selbst dem Extraktionszyklus unterworfen wurden. Um einen für den üblichen Test vergleichbaren und aussagekräftigen Wert zu erhalten, wurde eine Glasfasennenge extrahiert, die der Konzentration in der verstärkten Polyamidplatte entspricht (bei 50%iger Verstärkung). Der so bestimmte GF-TOC für die Bayer-GF (Glasfasertyp A) beträgt 45 mg C/d, während für die Vetrotex-GF ein TOC von 90 mg C/d bestimmt wird. Bei der Angabe der Einheiten wurde der Bezug auf die Oberfläche bewusst weggelassen, da die tatsächliche Oberfläche der Glasfasern in diesem Test nicht exakt 1 m² entspricht und andererseits die Normierung auf die Oberfläche aufgrund obiger Überlegungen einen anderen Verstärkungsgrad zugrundelegen würde. Aufgrund dieser Erkenntnisse werden erfindungsgemäss bevorzugt Glasfasern mit einem GF-TOC von kleiner als 50 mg C/d eingesetzt.

Gemäss einer bevorzugten Ausführungsform der erfindungsgemässen Polyamidformmasse wird die Komponente (C) zur Hauptsache, bevorzugtermassen im wesentlichen vollständig, aus entsprechend ausgebildeten Glasfasern gebildet.

Eine bevorzugte Ausführungsform der Polyamidformmasse nach der Erfindung zeichnet sich dadurch aus, dass die Komponente (C) im Bereich von 15-55 Gew.-%, bevorzugt im Bereich von 25 - 55 Gew.-%, oder 35-55 Gew -% insbesondere bevorzugt in Form von Glasfasern, vorliegt.

Gemäss einer weiteren bevorzugten Ausführungsform der Polyamidformmasse, liegt das Verhältnis der Komponente (A) zur Komponente (B) in der Polyamidformmasse im Bereich von 2 - 5, bevorzugt im Bereich von 2.5 - 4. Anders ausgedrückt lässt sich sagen, dass bevorzugtermassen die Komponente (A) im Bereich von 30 - 60 Gew.-%, bevorzugt im Bereich von 30-50 Gew.-% vorliegt, und dass die Komponente (B) im Bereich von 8-28 Gew.-%, bevorzugt im Bereich 10-22 Gew.-%, vorliegt.

In einer besonders bevorzugten Ausführungsform liegt die Konzentration der Matrix, der Mischung aus den Komponenten (A), (B) und (E), im Bereich von 45 - 85 Gew.-%, während die Verstärkungs- und Füllstoffe (Komponenten (C) und (D)) zusammen im Bereich von 15 bis 55 Gew.-% liegen.

Hinsichtlich der Eigenschaften der späteren Verarbeitung erweist sich als vorteilhaft, wenn das transparente Polyamid (B) eine Lösungsviskosität (ηᵣₑₗ) (0.5 Gew.-% in m-Kresol, 20°C) zwischen 1.3 und 2.0, insbesondere bevorzugt zwischen 1.40 und 1.85, aufweist und/oder einen Glasübergangspunkt T_{g} oberhalb von 90°C, bevorzugt oberhalb von 110°C, insbesondere bevorzugt oberhalb von 130°C besitzt. Ebenfalls als vorteilhaft erweist es sich, wenn das transparente Polyamid (B) ein mikrokristallines Polyamid und/oder Copolyamid mit einer Schmelzenthalpie im Bereich von 4-40 J/g, insbesondere im Bereich von 4-25 J/g, ist.

Bezüglich der mikrokristallinen Polyamide der Komponente (B) wird ein Copolyamid des Typs MACM/PACM jeweils mit aliphatischen Dicarbonsäuren mit 9 bis 36 Kohlenstoffatomen, insbesondere mit 10 bis 18 Kohlenstoffatomen wie zum Beispiel MACM12/PACM12, bevorzugt, dies bevorzugtermassen mit einer PACM-Konzentration grösser 50 mol-%, insbesondere grösser 60 mol-%. Dabei steht MACM für die ISO-Bezeichnung Bis-(4-amino-3-methyl-cyclohexyl)-methan, welches unter dem Handelsnamen 3,3'-Diinethyl-4-4'-diaminodicyclohexylmethan als Laromin C260-Typ (CAS Nr. 6864-37-5) kommerziell erhältlich ist. Die Ziffer nach dem Begriff MACM steht jeweils für eine aliphatische Dicarbonsäure (C12 z.B. DDS, Dodecandisäure), mit welcher das Diamin MACM polykondensiert ist. PACM steht für die ISO-Bezeichnung Bis-(4-aminocyclohexyl)-methan, welches unter dem Handelsnamen 4,4'-Bisaminodi-dyclohexymethan als Dicykan-Typ (CAS NI. 1761-71-3) kommerziell erhältlich ist. Geeignete aliphatische Dicarbonsäuren sind Azelainsäure, Sebazinsäure, Undecandisäure, Dodecandisäure, Brassylsäure, Tetradecandisäure, Pentadecandisäure, Hexadecandisäure, Octadecandisäure und Dimersäure mit 36 Kohlenstoffatomen.

Die amorphen Polyamide der Komponente (B) basieren auf aliphatischen und cycloaliphatischen Diaminen, zeigen aber keine oder nur eine sehr geringere Schmelzwärme (gemessen mittels DSC). Bevorzugt werden amorphe Polyamide der Zusammensetzung MACMI/12 und MACMI/MACMT/12 verwendet, wobei der Gehalt an Laurinlactam im Bereich von 15 bis 45 mol-%, bevorzugt kleiner als 40 mol-%, insbesondere kleiner 35 mol-% ist. Beim Copolyamid MACMI/MACMT/12 wird bevorzugt, wenn die Konzentration der Isophthalsäure grösser ist als die Konzentration der Terephthalsäure.

Besonders bevorzugte transparente Polyamide sind: MACM12, MACM14, MACM18, PACM12/MACM12, MACMI/12.

Ebenfalls hinsichtlich der Verarbeitbarkeit erweist es sich als Vorteil hat, wenn das aliphatische Polyamid der Komponente (A), insbesondere wenn dieses als PA12 ausgewählt ist, eine Lösungsviskosität (0.5 Gew.-% in m-Kresol, 20°C) im Bereich von ηᵣₑₗ = 1.5 bis 3.0, bevorzugt im Bereich von ηᵣₑₗ = 1.6 bis 2.6, insbesondere im Bereich von 1.6 bis 2.0, aufweist. Besonders gute Eigenschaften der Polyamidformmasse lassen sich erreichen, wenn das aliphatische Polyamid der Komponente (A) bis zu einem 50 Gew.-% Anteil an Glasfasern mit einer Lösungsviskosität (0.5 Gew.-% in m-Kresol, 20°C) von ηᵣₑₗ = 1.8 bis 2.0 vorliegt, für höher verstärkte Formmassen mit einer Lösungsviskosität von ηᵣₑₗ = 1.6 bis 1.8.

Eine weitere bevorzugte Ausführungsform der Polyamidformmasse nach der Erfindung ist **dadurch gekennzeichnet, dass** das aliphatisches Polyamid der Komponente (A), insbesondere wenn als PA12 ausgewählt, entweder ein ausgeglichenes Endgruppenverhältnis aufweist oder dass die Carboxy-Endgruppen im Überschuss vorliegen. Im letzteren Fall liegt die Konzentration der Aminoendgruppen bevorzugtermassen im Bereich von 5 bis 70 mmol/kg, bevorzugt im Bereich von 5 bis 50 mmol/kg und insbesondere im Bereich von 5 bis 30 mmol/kg. Generell liegt die Konzentration der Carboxy-Endgruppen bevorzugtermassen im Bereich von 50 bis 150 mmol/kg, bevorzugt im Bereich von 60 bis 120 mmol/kg und ganz besonders bevorzugt im Bereich von 60 bis 90 mmol/kg.

Wie bereits weiter oben erläutert, ist die vorgeschlagene Polyamidformmasse insbesondere **dadurch gekennzeichnet, dass** sie sich, wenn zu einem Formkörper verarbeitet, für die Lagerung oder Förderung von Trinkwasser bei erhöhter Temperatur, bevorzugt bei Temperaturen über 60°C, eignet. Sie zeichnet sich insofern spezifisch also dadurch aus, dass die gesamte Konzentration an gelöstem organischem Kohlenstoff bei der siebten Extraktion einen Wert von 12.5 mg C/m²d nicht überschreitet, die nach einem Verfahren bestimmt wird, wie es eingangs geschildert wurde.

Die Polyamidformmasse kann, wenn entsprechend eingestellt, gemäss einer weiteren bevorzugten Ausführungsform, wenn zu einem Formkörper verarbeitet, für die Lagerung oder Förderung von Trinkwasser bei Temperaturen über 80°C, bevorzugt bei Temperaturen über 85°C±2°C ausgelegt werden. Sie zeichnet sich insofern spezifisch dadurch aus, dass die gesamte Konzentration an gelöstem organischem Kohlenstoff bei der siebten Extraktion einen Wert von 12.5 mg C/m²d nicht überschreitet.

Als weiteres Ergebnis der Entwicklungsarbeiten wurde gefunden, dass die Vernetzung von PA12-Formmassen den TOC ebenfalls deutlich reduzieren kann. Allerdings ist eine Vernetzung von z.B. PA 12 allein nicht ausreichend, um den geforderten Richtwert bzgl. des TOC zu erreichen. In Verbindung mit einer strahleninduzierten Vernetzung kann aber die Konzentration des benötigten transparenten Polyamids (Komponente B) herabgesetzt werden. Des Weiteren wird erwartet, dass die Wärmeformbeständigkeit der Formteile durch die Vernetzung verbessert werden kann. D.h. die Formteile (Rohre, Fittings) sind widerstandfähiger gegen mechanische Einflüsse, wie z.B. einen erhöhten Innendruck. Der Berstdruck eines vernetzten Rohres oder Fittings sollte auf einem höheren Niveau liegen, insbesondere bei hohen Temperaturen (Heisswasser). Die Möglichkeit, der Formmasse ein Vernetzungsadditiv hinzuzufügen und die gefertigten Formteile zu vernetzen, ist somit ebenfalls Gegenstand der Anmeldung.

Eine weitere bevorzugte Ausführungsform besteht entsprechend darin, dass für die erfindungsgemässe Verwendung die Komponenten (A) und/oder (B) (und/oder ggf. sogar (E)) wenigstens teilweise vernetzt sind, bevorzugt durch Hinzufügung eines Vernetzungsadditivs, insbesondere bevorzugt zur strahleninduzierten Vernetzung, wobei es sich bevorzugtermassen dabei um TAIC (Triallylisocyanurat), insbesondere in einem Anteil von im Bereich von 1-5%, handelt. Es kann sich beispielsweise um Systeme handeln, wie sie in der WO 2007/074086 beschrieben sind. Als Variante kann die Vernetzung, insbesondere die strahleninduzierte Vernetzung (z.B. Elektronenstrahlen), auch ohne Zusatz eines Vernetzungsadditivs erfolgen. Die erfindungsgemäss verwendete Strahlendosis ist grösser als 50 kGy, bevorzugt wird mit einer Dosis zwischen 60 bis 100 kGy gearbeitet.

Durch Strahlenvernetzung mit Hilfe des Vernetzungsadditivs TAIC (2 Gew.-% bezogen auf die Polyamid-Matrix) lässt sich der TOC-Wert deutlich reduzieren, obwohl mit TAIC der Polyamid-Formmasse ein niedermolekulares Agens zugesetzt wird. Die Zugabe des Vernetzungsadditives erfolgt dabei entweder durch Auftrommeln des Vernetzungsadditives auf die Komponente A und/oder B oder der Verwendung eines das Vernetzungsadditiv enthaltenden Masterbatches auf Basis der Komponenten A und/oder B oder durch Zudosieren des reinen oder gelösten Vernetzungsadditives bei der Compoundierung der Komponenten A bis E.

Als bevorzugte weitere Verstärkungsstoffe (Komponente C) seien beispielhaft andere Fasern (d.h. nicht Glasfasern) wie Kohlenstofffasern (Carbonfasem, Graphitfasern), Borfasern, Aramid- (p- oder m-Aramidfasem (z.B. Kevlar® oder Nomex®, DuPont) oder deren Gemische) und Basaltfasern genannt, wobei die genannten Verstärkungsfasern als Kurz- oder Langfasern, auch in Form einer Mischung von verschiedenen Fasern eingesetzt werden können. Diese Fasern können generell beliebigen Querschnitt aufweisen. In einer weiteren alternativen erfindungsgemässen Ausführungsform können die erfindungsgemäss eingesetzten Glasfasern im Gemisch mit Kohlenstofffasern (Carbonfasern, Graphitfasern) vorliegen. Durch Austausch eines Teils der Glasfasern durch Kohlenstofffasern entsteht somit ein hybridfaserverstärkter Compound, dessen Steifigkeit im Vergleich zu reinen Glasfasern erhöht ist. Das Gemisch aus Glas- und Kohlenstofffasern kann ein Gewichtsverhältnis von Glasfaser/ Kohlenstofffasern von 70/ 30 bis 97/3, insbesondere von 80/20 bis 95/5 aufweisen.

Optional können weitere Füllstoffe (Komponente D) den Formmassen in Mengen von 0 bis 30 Gew.-% zugesetzt sein. Die Komponente (D) kann des weiteren Füllstoffe, gegebenenfalls in oberflächenbehandelter Form enthalten, ausgewählt aus der folgenden Gruppe: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, insbesondere gemahlene insbesondere fläche, Glasfasern, dauerhaft magnetische bzw. magnetisierbare Metallverbindungen und/oder Legierungen, sowie Mischungen der Elemente aus dieser Gruppe. Besonders bevorzugt als Füllstoff werden Mikroglaskugeln mit einem mittleren Durchmesser im Bereich von 5 bis 100 µm, da diese dem Formteil tendenziell isotrope Eigenschaften verleihen und damit die Herstellung von Formteilen mit niedrigen Verzug erlauben.

Als Füllstoff können die erfindungsgemässen thermoplastischen Formmassen vorzugsweise also einen teilchenförmigen Füllstoff oder eine Mischung aus zwei oder mehr unterschiedlichen Füllstoffen auch in Kombination mit Verstärkungsstoffen enthalten.

Da jede organische Stabilisierung eine mögliche C-Quelle hinsichtlich der TOC-Bestimmung gemäss KTW-Richtlinie darstellt, müssen höhere Konzentrationen an Stabilisatoren vermieden werden. Daher wird bevorzugt eine maximale Konzentration der Stabilisierungsadditive (Komponente E) von 1.0 Gew-% bevorzugt 0.5 Gew.-% bezogen auf die Polyamid-Matrix eingehalten. Um also sicherzustellen, dass keine weiteren unerwünschten C-Quellen in der Polyamidformmasse enthalten sind, erweist es sich als vorteilhaft, wenn der Anteil an Additiven (E) möglichst gering gehalten wird, so beispielsweise indem die Polyamidformmasse höchstens 0.5 Gewichtsprozent an der Komponente (E) aufweist, das heisst an weiteren Additiven, bevorzugt Stabilisierungsadditiven, enthält. Bevorzugte Stabilisatoren sind Phenol- und/oder Phosphit-Verbindungen, wie z.B. Irganox 245, Irganox 1010, Irganox 1098, Hostanox PAR 24 oder Irgafos 168. Besonders bevorzugt wird Irganox 1010 in einer Konzentration von gleich oder kleiner 0.5 Gew.-%.

Unter Transparenz bei der Bezeichnung der Komponente (B) ist generell zu verstehen, dass die Lichttransmission einer aus der Komponente (B) hergestellten Platte einer Dicke von 2 mm wenigstens 88%, bevorzugt wenigstens 90%, beträgt, wenn die Transmission mittels UV/VIS-Spektrometer bei einer Wellenlänge von 600 nm bestimmt wird.

Des weiteren betrifft die vorliegende Erfindung einen Formkörper zur Förderung und/oder Aufbewahrung von Trinkwasser, insbesondere bei erhöhten Temperaturen bevorzugtermassen im Bereich von oder oberhalb von 80°C, hergestellt aus einer Polyamidformmasse, wie sie oben charakterisiert worden ist. Bei einem solchen Formteilen kann es sich beispielsweise um eine Armatur, ein Fitting, ein Gehäuse, einen Mischer, einen Hahn, ein Filtergehäuse, einen Wasserzähler und Wasserzählerkomponenten (Lager, Propeller, Pilone), ein Ventil und Ventilkomponenten (Gehäuse, Absperrkugel, Schieber, Zylinder), Verteiler eine Kartusche, eine Pumpe und Pumpenkomponenten (z.B. Schaufelräder, Impeller), eine Leitung oder einen Behälter respektive Bestandteil oder Element davon, handeln. Bei einem solchen Formkörper ist typischerweise wenigstens ein Bereich, bevorzugtermassen in Form einer Beschichtung oder eines Abschnitts, dem Trinkwasser bei bestimmungsgemässem Gebrauch im wesentlichen direkt ausgesetzt ist.

Des weiteren betrifft die vorliegende Erfindung eine Verwendung einer Polyamidformmasse, wie sie oben beschrieben wurde, zur Herstellung eines Formkörpers, insbesondere eines Bauteils zur Förderung und/oder Aufbewahrung von Trinkwasser, insbesondere bei erhöhten Temperaturen bevorzugtermassen im Bereich von oder oberhalb von 80°C, insbesondere Armatur, Fitting, Gehäuse, Filtergehäuse, Hahn, Verteiler, Wasserzähler, Wasserzählerkomponente (Lager, Propeller, ,Pilone, Ventil, Ventilkomponente Gehäuse, Absperrkugel, Schieber, Zylinder), Kartusche, Pumpe, Pumpenkomponente (z.B. Schaufelräder, Impeller) Leitung oder Behälter respektive Bestandteil oder Element davon.

### WEGE ZUR AUSFÜHRUNG DER ERFINDUNG

In den Beispielen gemäss Tabelle 1 wurden nachfolgend genannte Materialien verwendet:
PA Typ A: Polyamid 12 (ηᵣₑₗ = 1,88), EMS-CHEMIE AG, Schweiz
PA Typ B: Polyamid MACMI/12 mit ηₑₗ = 1,55, EMS-CHEMIE AG, Schweiz
PA Typ C: Polyamid MACM12 mit ηᵣₑₗ = 1,74, EMS-CHEMIE AG, Schweiz
PA Typ D: Polyamid MACMI/MACMT/12 mit ηᵣₑₗ = 1,55, EMS-CHEMIE AG, Schweiz
Irganox 1010: Pentaerythritoltetrakis-[3-(3,5-di-tert-butyl-4-hydroxyphenyl)-propionate, Antioxidans auf Basis eines sterisch gehinderten Phenols
Glasfasern Typ A: CS 7928, 4.5 mm lang, 10 µm Durchmesser, BAYER AG, Deutschland

Die Formmassen der Zusammensetzungen in Tabelle 1 wurden auf einem Zweiwellenextruder der Fa. Werner u. Pfleiderer Typ ZSK 30 hergestellt. Die Granulate des Typs B bis E werden in die Einzugszone dosiert. Die Glasfaser wird über einen Sidefeeder 3 Gehäuseeinheiten vor der Düse in die Polymerschmelze dosiert.

Die Gehäusetemperatur wurde als aufsteigendes Profil bis 280°C eingestellt. Bei 150 bis 200 upm wurden 10 kg Durchsatz erreicht. Die Granulierung erfolgte mittels einer Unterwassergranulierung bzw. Heissabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 100°C für 24h wurden die Granulateigenschaften gemessen und die Prüfkörper hergestellt. Die Prüfkörper wurden auf einer Arburg Spritzgussmaschine hergestellt, wobei die Zylindertemperaturen von 220°C bis 280°C und eine Scheckenumfangsgeschwindigkeit von 15 m/min eingestellt wurden. Die Formtemperatur wurde mit 40 - 90°C gewählt.

Die Messungen wurden nach folgenden Normen und an folgenden Prüfkörpern durchgeführt.

Zug-E-Modul: ISO 527 mit einer Zuggeschwindigkeit von 1 mm/min, ISO-Zugstab , Norm: ISO/CD 3167, Typ A1, 170 x 20/10 x 4 mm, Temperatur 23 °C

Reissfestigkeit und Reissdehnung: ISO 527 mit einer Zuggeschwindigkeit von 5 mm/min für verstärkte Formmassen und mit einer Zuggeschwindigkeit von 50 mm/min für unverstärkte Formmassen. ISO-Zugstab, Norm: ISO/CD 3167, Typ A1, 170 x 20/10 x 4 mm, Temperatur 23 °C

Schlagzähigkeit nach Charpy: ISO 179/*eU, ISO-Prüfstab, Norm: ISO/CD 3167, Typ B1, 80 x 10 x 4 mm, Temperatur 23 °C, * 1 = nicht instrumentiert, 2 = instrumentiert Kerbschlagzähigkeit nach Charpy: ISO 179/*eA, ISO-Prüfstab, Norm: ISO/CD 3167, Typ B1, 80 x 10 x 4 mm, Temperatur 23 °C, * 1 = nicht instrumentiert, 2 = instrumentiert

Glasumwandlungstemperatur (Tg), Schmelzenthalpie (ΔH): ISO-Norm 11357-1/-2, Granulat.

Die Differential Scanning Calorimetry (DSC) wurde mit Aufheizrate von 20 °C/min durchgeführt.

Relative Viskosität: DIN EN ISO 307, in 0,5 Gew.-%-iger m-Kresollösung, Temperatur 20 °C

MVR: (Melt volume rate): nach ISO 1133 bei 275°C und einer Belastung von 5 kg Berstdruck: Ein zylindrischer, einseitig verschlossener Spritzgusskörper (Innendurchmesser 27,2 mm; Wandstärke: 4 mm) wird mit Wasser gefüllt, mittels einer Hydraulikschnellkupplung in einem Berstdruckprüfstand montiert und mit 10 bar/s Druckanstieg einem Berstdruckversuch (Kurzzeit-Innendruckbelastung bis zum Versagen) unterzogen. In den Tabellen wird der maximal erreichte Druck angegeben. Die Probekörper, die einer Wasserlagerung unterzogen wurden, wurden unmittelbar nach Beendigung der Lagerung dem Berstdruckversuch unterworfen.

Messung TOC-Wert 7. Migration: Nach Leitlinie zur hygienischen Beurteilung von organischen Materialien in Kontakt mit Trinkwasser (KTW-Leitlinie, Stand : 16.05.2007) Heisswassertest bei (85 ± 2) °C (Durchführung des Migrationstests entsprechend DIN EN 12873-1: 2004 und -2: 2005); es wurden je zwei identische Kontakt- und Blindversuche parallel ausgeführt; die Differenz der Mittelwerte von Mess- und Blindwert ergibt die gesuchte Kohlenstoffkonzentration; als Prüfkörper wurden Platten mit einer Oberfläche von 87.5 cm² eingesetzt, die bei einem O/V-Verhältnis von 2.5 dm⁻¹ je mit 350 ml Prüfwasser pro Migrationstest extrahiert wurden; der TOC wurde nach der NPOC-Methode mit dem Gerät TOC-V CPH von Shimadzu bestimmt.

Zeitstand-Innendruckverhalten: Wurde gemäss ISO 9080 an Rohren mit einem Durchmesser von 32 mm und einer Wandstärke von 3 mm bei einer Temperatur von 60°C bestimmt. Gibt die hydrostatische Belastung an, welcher das geprüfte Rohr während einer Dauer von 50 Jahren bei der Prüftemperatur widerstehen kann.

Wenn in der Tabelle oder Beschreibung nicht anders vermerkt, werden die Prüfkörper im trockenen Zustand verwendet. Dazu werden die Prüfkörper nach dem Spritzguss mindestens 48 h bei Raumtemperatur in trockener Umgebung gelagert.

**Tabelle 1: Blends mit GF Verstärkung, VB = Vergleichsbeispiel, nicht nach der Erfindung, B = Beispiel nach der Erfindung.**

| **Komponenten** | **Einheit** | **VB1** | **B1** | **B2** | **B3** | **B4** | **B5** | **B6** |
|---|---|---|---|---|---|---|---|---|
| PA Typ A | Gew.-% | 44.80 | 39.80 | 37.32 | 34.82 | 37.32 | 37.32 | 34.82 |
| PA Typ B | Gew.-% | | | | | 12.43 | | |
| PA Typ C | Gew.-% | 4.95 | 9.95 | 12.43 | 14.93 | | | |
| PA Typ D | Gew.-% | | | | | | 12.43 | 14.93 |
| IRGANOX1010 | Gew.-% | 0.25 | 0.25 | 0.25 | 0.25 | 0.25 | 0.25 | 0.25 |
| Glasfasern Typ A | Gew.-% | 50.00 | 50.00 | 50.00 | 50.00 | 50.00 | 50.00 | 50.00 |
| | | | | | | | | |
| Zug-E-Modul | MPa | 11800 | 11860 | 11860 | 11890 | 12140 | 12240 | 12140 |
| Reissfestigkeit | MPa | 150 | 154 | 152 | 152 | 156 | 168 | 168 |
| Reissdehnung | % | 4.5 | 4.5 | 4.3 | 4.1 | 4.9 | 5.2 | 5 |
| Schlagzähigkeit Charpy, 23°C | kJ/m² | 95 | 92 | 92 | 83 | 98 | 89 | 82 |
| Kerbschlagzähigkeit Charpy, 23°C | kJ/m² | 25 | 25 | 25 | 26 | 25 | 17 | 18 |
| Berstdruck | bar | 270 | 275 | 280 | 290 | 280 | 290 | 300 |
| Berstdruck nach Lagerung 2000h, 23°C | bar | - | - | - | - | 250 | - | 260 |
| Berstdruck nach Lagerung 2000h, 80°C | bar | - | - | - | - | 235 | - | 240 |
| Berstdruck nach Lagerung 2000h, 95°C | bar | - | - | - | - | 230 | - | 240 |
| 7. Migration | mg C/m² d | 22 | 12 | 9 | 6 | 9 | 9 | 6 |

| **Vergleichsbeispiel VB2** | | |
|---|---|---|
| Zusammensetzung | | |
| PA66 | Gew.-% | 37.32 |
| Polyamid Typ B | Gew.-% | 12.43 |
| Irganox 1010 | Gew.-% | 0.25 |
| Glasfasern Typ A | Gew.-% | 50.00 |

| Berstdruck | | |
|---|---|---|
| Vor der Lagerung | bar | 350 |
| Nach Lagerung 2000h, 23°C | bar | 270 |
| Nach Lagerung 2000h, 80°C | bar | 195 |
| Nach Lagerung 2000h, 95°C | bar | 180 |

Wie die Beispiele B4 und B6 zeigen, verbleibt der Berstdruck der erfindungsgemässen Formmassen auch nach 2000h Lagerung in heissem Wasser von 80 bzw. 95°C auf hohem Niveau. Wird in B4 der PA Typ A durch Polyamid 66 ausgetauscht (VB2), ergibt sich zwar ein höherer Berstdruck vor der Lagerung, er sinkt jedoch bei der Wasserlagerung, insbesondere bei der Heisswasserlagerung deutlich ab.

**Tabelle 2: Vernetzte Formteile (Zug- und Schlagstäbe, Zylinder für Berstdruckprüfung sowie Platten) auf Basis von Blends mit GF Verstärkung, VB = Vergleichsbeispiel, nicht nach der Erfindung, B = Beispiel nach der Erfindung.**

| **Komponenten** | **Einheit** | **VB3** | **VB4** | **B7** | **B8** | **B9** |
|---|---|---|---|---|---|---|
| PA Typ A | Gew.-% | 49.75 | 48.75 | 38.80 | 67.80 | 66.40 |
| PA Typ C | Gew.-% | 0 | 0 | 9.95 | 16.95 | 16.65 |
| TAIC | Gew.-% | 0 | 1.00 | 1.00 | 0 | 1.7 |
| IRGANOX 1010 | Gew.-% | 0.25 | 0.25 | 0.25 | 0.25 | 0.25 |
| Glasfasern Typ A | Gew.-% | 50.00 | 50.00 | 50.00 | 15.00 | 15.00 |
| | | | | | | |
| Zug-E-Modul | MPa | 11800 | 11950 | 12000 | 3150 | 3050 |
| Reissfestigkeit | MPa | 149 | 155 | 157 | 75 | 95 |
| Reissdehnung | % | 5.2 | 3.4 | 3.3 | 12 | 8 |
| Berstdruck | bar | 260 | 270 | 285 | - | - |
| TOC-Wert 7. Migration | mg C/m² d | 45 | 18 | 6 | 12 | 7 |
| Zeitstand-Innendruckverhalten Prüfspannung | N/mm² | - | - | - | 5.3 | 14.2 |

Die Formkörper, hergestellt aus den Formmassen des Vergleichsbeispiels VB4 und der Beispiele B7 und B9, wurden durch Bestrahlung mit Elektronen (Dosis: 66 kGy) vernetzt.

Die Migrationsrate (TOC) lässt sich durch Vernetzen deutlich reduzieren. Jedoch genügt eine Vernetzung der PA12-Matrix allein nicht, um die geforderte tiefe Migrationsrate zu erreichen. Dies belegen die Vergleichsbeispiele VB3 und VB4. Erst die Kombination von Vernetzung und Zusatz von transparentem Polyamid löst die gestellte Aufgabe hinsichtlich des TOC-Wertes. Allerdings werden tiefe Migrationswerte bei den vernetzten Formkörpern bereits mit niedrigerer Konzentration an transparentem Polyamid erzielt. Dies zeigt ein Vergleich der Beispiele B1 und B7. Bei gleichem Anteil an transparentem Polyamid (PA Typ D) weist die unvernetzte Formmasse (B 1) einen TOC-Wert bei der 7. Migration von 12 mg C/m² d auf, während bei der vernetzten Formmasse (B7) die Migrationsrate lediglich 6 mg C/m² d beträgt, d.h. die Migrationsrate wurde durch Vernetzung halbiert.

Ein Vergleich der Beispiele B8 und B9 zeigt, dass durch Vernetzen der erfindungsgemässen Formkörper das Zeitstandverhalten unter Innendruckbelastung deutlich verbessert werden konnte; die Prüfspannung konnte mehr als verdoppelt werden.

## Patentansprüche

1. Polyamidformmasse aus den folgenden Bestandteilen:
(A) 25-70 Gew.-% aliphatisches Polyamid, ausgewählt aus der Gruppe PA1010, PA1012, PA1014, PA1210, PA1212, PA1214, PA12 und PA11 oder eine Mischung zweier oder mehrerer dieser Systeme;
(B) 8-35 Gew.-% transparentes Polyamid, ausgewählt aus der Gruppe MACM9-36, MACM9-36/PACM9-36, MACMI/12, MACMI/MACMT/12, oder eine Mischung zweier oder mehrerer dieser Systeme;
(C) 10-60 Gew.-% Verstärkungsstoffe;
(D) 0 - 30 Gew.-% teilchen- und/oder schichtförmige Füllstoffe;
(E) 0 - 3 Gew.-% Hilfsstoffe und/oder Additive
wobei die Summe der Komponenten (A)-(E) 100 Gew.-% ausmacht, und
wobei wenigstens teilweise als Verstärkungsstoffe (C) Fasern eingesetzt sind, deren Querschnittsfläche entweder kreisförmig ist oder aber bei welchen das Abmessungsverhältnis von der Haupt-Querschnittsachse zur Neben-Querschnittsachse unterhalb von 2 liegt.

2. Polyamidformmasse nach Anspruch 1, **dadurch gekennzeichnet, dass** es sich bei der Komponente (A) um PA12 handelt.

3. Polyamidformmasse nach einem der vorhergehenden Ansprüche, **dadurch gekennzeichnet, dass** es sich bei der Komponente (B) um MACM12, MACM14, MACM16, MACM18, MACMI/12 oder MACMI/MACMT/12 oder um eine Mischung zweier oder mehrerer dieser Systeme handelt.

4. Polyamidformmasse nach einem der vorhergehenden Ansprüche, **dadurch gekennzeichnet, dass** die Fasern der Komponente (C) ausgewählt sind aus der Gruppe: Glasfasern, Kohlenstofffasern, Borfasern, Aramidfasern, Basaltfasern oder Mischungen solcher Fasern.

5. Polyamidformmasse nach einem der vorhergehenden Ansprüche, **dadurch gekennzeichnet, dass** die Komponente (C) zur Hauptsache, bevorzugtermassen im wesentlichen vollständig aus entsprechend ausgebildeten Glasfasern gebildet wird.

6. Polyamidformmasse nach einem der vorhergehenden Ansprüche, **dadurch gekennzeichnet, dass** das Verhältnis der Komponente (A) zur Komponente (B) in der Polyamidformmasse im Bereich von 2 - 5, bevorzugt im Bereich von 2.5 - 4, liegt.

7. Polyamidformmasse nach einem der vorhergehenden Ansprüche, **dadurch gekennzeichnet, dass** das transparente Polyamid (B) eine Lösungsviskosität (ηᵣₑₗ) zwischen 1.3 und 2.0, insbesondere bevorzugt zwischen 1.40 und 1.85, aufweist und/oder einen Glasübergangspunkt T_{g} oberhalb von 90°C, bevorzugt oberhalb von 110°C, insbesondere bevorzugt oberhalb von 130°C.

8. Polyamidformmasse nach einem der vorhergehenden Ansprüche, **dadurch gekennzeichnet, dass** das transparente Polyamid (B) ein mikrokristallines Polyamid und/oder Copolyamid mit einer Schmelzenthalpie im Bereich von 4-40 J/g, insbesondere im Bereich von 4-25 J/g, ist.

9. Polyamidformmasse nach einem der vorhergehenden Ansprüche, **dadurch gekennzeichnet, dass** das Polyamid der Komponente (A), bevorzugt ausgewählt als PA12, eine Lösungsviskosität im Bereich von ηᵣₑₗ = 1.5 bis 3.0, bevorzugt im Bereich von ηᵣₑₗ = 1.6 bis 2.6, insbesondere im Bereich von 1.6 bis 2.0, aufweist.

10. Polyamidformmasse nach einem der vorhergehenden Ansprüche, **dadurch gekennzeichnet, dass** das Polyamid der Komponente (A), bevorzugt ausgewählt als PA12, bis zu einem 50 Gew.-% Anteil an Glasfasern mit einer Lösungsviskosität von ηᵣₑₗ = 1.8 bis 2.0 vorliegt, für höher verstärkte Formmassen mit einer Lösungsviskosität von ηᵣₑₗ = 1.6 bis 1.8.

11. Polyamidformmasse nach einem der vorhergehenden Ansprüche, **dadurch gekennzeichnet, dass** das Polyamid der Komponente (A) , bevorzugt ausgewählt als PA12, entweder ein ausgeglichenes Endgruppenverhältnis aufweist oder dass die Carboxy-Endgruppen im Überschuss vorliegen, wobei die Konzentration der Aminoendgruppen bevorzugtermassen im Bereich von 5 bis 70 mmol/kg liegt, bevorzugt im Bereich von 5 bis 50 mmol/kg und insbesondere im Bereich von 5 bis 30 mmol/kg und/oder wobei die Konzentration der Carboxy-Endgruppen bevorzugtermassen im Bereich von 50 bis 150 mmol/kg liegt, bevorzugt im Bereich von 60 bis 120 mmol/kg und ganz besonders bevorzugt im Bereich von 60 bis 90 mmol/kg.

12. Polyamidformmasse nach einem der vorhergehenden Ansprüche, **dadurch gekennzeichnet, dass** die Komponente (A) im Bereich von 30 - 50 Gew.-%, bevorzugt im Bereich von 30-40 Gew.-% vorliegt, und dass die Komponente (B) im Bereich von 8-28 Gew.-%, bevorzugt im Bereich 10-22 Gew.-%, vorliegt.

13. Polyamidformmasse nach einem der vorhergehenden Ansprüche, **dadurch gekennzeichnet, dass** die Summe der Komponenten (A), (B) und (E) im Bereich von 45 - 85 Gew.-% liegt, während die Summe der Komponenten (C) und (D) im Bereich von 15 bis 55 Gew.-% liegt.

14. Polyamidformmasse nach einem der vorhergehenden Ansprüche, **dadurch gekennzeichnet, dass** die Komponente (C) im Bereich von 25-55 Gew.-%, bevorzugt im Bereich von 35 - 55 Gew.-%, insbesondere bevorzugt in Form von Glasfasern, vorliegt.

15. Polyamidformmasse nach einem der vorhergehenden Ansprüche, **dadurch gekennzeichnet, dass** die Polyamidformmasse, wenn zu einem Formkörper verarbeitet, für die Lagerung oder Förderung von Trinkwasser bei erhöhter Temperatur, bevorzugt bei Temperaturen über 60°C, ausgelegt ist, wobei dabei insbesondere bevorzugt die gesamte Konzentration an gelöstem organischem Kohlenstoff bei der siebten Extraktion einen Wert von 12.5 mg C/m²d nicht überschreitet.

16. Polyamidformmasse nach einem der vorhergehenden Ansprüche, **dadurch gekennzeichnet, dass** die Polyamidformmasse, wenn zu einem Formkörper verarbeitet, für die Lagerung oder Förderung von Trinkwasser bei Temperaturen über 80°C, bevorzugt bei Temperaturen über 85°C±2°C ausgelegt ist, wobei dabei insbesondere bevorzugt die gesamte Konzentration an gelöstem organischem Kohlenstoff bei der siebten Extraktion einen Wert von 12.5 mg C/m²d nicht überschreitet.

17. Polyamidformmasse nach einem der vorhergehenden Ansprüche, **dadurch gekennzeichnet, dass** die Mischung aus den Komponenten (A) und (B) wenigstens teilweise vernetzt ist, mit oder ohne Hinzufügung eines Vernetzungsadditivs, insbesondere unter strahleninduzierter Vernetzung, wobei es sich bevorzugtermassen beim Vernetzungsadditiv um TAIC, insbesondere in einem Anteil von im Bereich von 1-5%, handelt.

18. Polyamidformmasse nach einem der vorhergehenden Ansprüche, **dadurch gekennzeichnet, dass** es sich bei der Komponente (D) um Füllstoffe, gegebenenfalls in oberflächenbehandelter Form, ausgewählt aus der folgenden Gruppe handelt: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, insbesondere gemahlene, flache Glasfasern, dauerhaft magnetische bzw. magnetisierbare Metallverbindungen und/oder Legierungen, sowie Mischungen der Elemente aus dieser Gruppe.

19. Polyamidformmasse nach einem der vorhergehenden Ansprüche, **dadurch gekennzeichnet, dass** der Anteil der Komponente (E), insbesondere der Anteil an Stabilisierungsadditiven, höchstens 1.0 Gew.-%, bevorzugt höchstens 0.5 Gew.- % ausmacht.

20. Polyamidformmasse nach einem der vorhergehenden Ansprüche, **dadurch gekennzeichnet, dass** die Lichttransmission, bestimmt bei einer Wellenlänge von 600 nm, einer aus der Komponente (B) hergestellten Platte einer Dicke von 2 mm wenigstens 88%, bevorzugt wenigstens 90%, beträgt.

21. Formkörper zur Förderung und/oder Aufbewahrung von Trinkwasser, insbesondere bei erhöhten Temperaturen bevorzugtermassen im Bereich von oder oberhalb von 80°C, insbesondere Armatur, Fitting, Gehäuse, Mischer, Hahn, Filtergehäuse, Wasserzähler, Wasserzählerkomponente (Lager, Propeller, Pilone), Ventil, Ventilkomponente (Gehäuse, Absperrkugel, Schieber, Zylinder), Verteiler, Kartusche, Pumpe, Pumpenkomponente (z.B. Schaufelräder, Impeller), Leitung oder Behälter respektive Bestandteil oder Element davon, hergestellt unter Verwendung einer Formmasse nach einem der Ansprüche 1-17.

22. Formkörper nach Anspruch 21, **dadurch gekennzeichnet, dass** wenigstens ein Bereich, bevorzugtermassen in Form einer Beschichtung oder eines Abschnitts, dem Trinkwasser bei bestimmungsgemässem Gebrauch im wesentlichen direkt ausgesetzt ist.

23. Verwendung einer Polyamidformmasse nach einem der Ansprüche 1-20 zur Herstellung eines Formkörpers, insbesondere eines Bauteils zur Förderung und/oder Aufbewahrung von Trinkwasser, insbesondere bei erhöhten Temperaturen bevorzugtermassen im Bereich von oder oberhalb von 80°C, insbesondere Armatur, Fitting, Gehäuse, Mischer, Hahn, Filtergehäuse, Wasserzähler, Wasserzählerkomponente (Lager, Propeller, Pilone), Ventil, Ventilkomponente (Gehäuse, Absperrkugel, Schieber, Zylinder), Verteiler, Kartusche, Pumpe, Pumpenkomponente (z.B. Schaufelräder, Impeller), Leitung oder Behälter respektive Bestandteil oder Element davon.

## Claims

1. A polyamide molding material composed of the following constituents:
(A) 25-70% by weight of aliphatic polyamide selected from the group of PA1010, PA1012, PA1014, PA1210, PA1212, PA1214, PA12 and PA11 or a mixture of two or more of these systems;
(B) 8-35% by weight of transparent polyamide selected from the group of MACM9-36, MACM9-36/PACM9-36, MACMI/12, MACMI/MACMT/12, or a mixture of two or more of these systems;
(C) 10-60% by weight of reinforcers;
(D) 0-30% by weight of particulate and/or layered fillers;
(E) 0-3% by weight of adjuvants and/or additives,
where the sum of components (A)-(E) adds up to 100% by weight, and
wherein the reinforcers (C) used are at least partly fibers which either have a circular cross-sectional area or in which the dimension ratio of the major cross-sectional axis to the minor cross-sectional axis is less than 2.

2. The polyamide molding material as claimed in claim 1, **characterized in that** component (A) is PA12.

3. The polyamide molding material as claimed in either of the preceding claims, **characterized in that** component (B) is MACM12, MACM14, MACM16, MACM18, MACMI/12 or MACMI/MACMT/12, or is a mixture of two or more of these systems.

4. The polyamide molding material as claimed in any of the preceding claims, **characterized in that** the fibers of component (C) are selected from the group of: glass fibers, carbon fibers, boron fibers, aramid fibers, basalt fibers or mixtures of such fibers.

5. The polyamide molding material as claimed in any of the preceding claims, **characterized in that** component (C) is formed mainly, preferably essentially completely, from correspondingly configured glass fibers.

6. The polyamide molding material as claimed in any of the preceding claims, **characterized in that** the ratio of component (A) to component (B) in the polyamide molding material is in the range of 2-5, preferably in the range of 2.5-4.

7. The polyamide molding material as claimed in any of the preceding claims, **characterized in that** the transparent polyamide (B) has a solution viscosity (ηᵣₑₗ) between 1.3 and 2.0, especially preferably between 1.40 and 1.85, and/or a glass transition temperature T_{g} above 90°C, preferably above 110°C, especially preferably above 130°C.

8. The polyamide molding material as claimed in any of the preceding claims, **characterized in that** the transparent polyamide (B) is a microcrystalline polyamide and/or copolyamide with an enthalpy of fusion in the range of 4-40 J/g, especially in the range of 4-25 J/g.

9. The polyamide molding material as claimed in any of the preceding claims, **characterized in that** the polyamide of component (A), preferably selected as PA12, has a solution viscosity in the range of ηᵣₑₗ = 1.5 to 3.0, preferably in the range of ηᵣₑₗ = 1.6 to 2.6, especially in the range from 1.6 to 2.0.

10. The polyamide molding material as claimed in any of the preceding claims, **characterized in that** the polyamide of component (A), preferably selected as PA12, up to a 50% by weight proportion of glass fibers has a solution viscosity of ηᵣₑₗ = 1.8 to 2.0, and for more highly reinforced molding materials has a solution viscosity of ηᵣₑₗ = 1.6 to 1.8.

11. The polyamide molding material as claimed in any of the preceding claims, **characterized in that** the polyamide of component (A), preferably selected as PA12, either has a balanced end group ratio or the carboxyl end groups are present in excess, wherein the concentration of the amino end groups is preferably in the range from 5 to 70 mmol/kg, more preferably in the range from 5 to 50 mmol/kg and especially in the range from 5 to 30 mmol/kg, and/or wherein the concentration of the carboxyl end groups is preferably in the range from 50 to 150 mmol/kg, more preferably in the range from 60 to 120 mmol/kg and most preferably in the range from 60 to 90 mmol/kg.

12. The polyamide molding material as claimed in any of the preceding claims, **characterized in that** component (A) is present in the range of 30-50% by weight, preferably in the range of 30-40% by weight, and **in that** component (B) is present in the range of 8-28% by weight, preferably in the range of 10-22% by weight.

13. The polyamide molding material as claimed in any of the preceding claims, **characterized in that** the sum of components (A), (B) and (E) is in the range of 45-85% by weight, whereas the sum of components (C) and (D) is in the range from 15 to 55% by weight.

14. The polyamide molding material as claimed in any of the preceding claims, **characterized in that** component (C) is present in the range of 25-55% by weight, preferably in the range of 35-55% by weight, especially preferably in the form of glass fibers.

15. The polyamide molding material as claimed in any of the preceding claims, **characterized in that** the polyamide molding material, when processed to a molding, is designed for the storage or delivery of drinking water at elevated temperature, preferably at temperatures of more than 60°C, in which case the total concentration of dissolved organic carbon in the seventh extraction especially preferably does not exceed a value of 12.5 mg C/m²d.

16. The polyamide molding material as claimed in any of the preceding claims, **characterized in that** the polyamide molding material, when processed to a molding, is designed for the storage or delivery of drinking water at temperatures greater than 80°C, preferably at temperatures of more than 85°C ± 2°C, in which case the total concentration of dissolved organic carbon in the seventh extraction especially preferably does not exceed a value of 12.5 mg C/m²d.

17. The polyamide molding material as claimed in any of the preceding claims, **characterized in that** the mixture of components (A) and (B) is at least partly cross-linked, with or without addition of a crosslinking additive, especially with radiation-induced crosslinking, wherein the crosslinking additive is preferably TAIC, especially in a proportion in the range of 1-5%.

18. The polyamide molding material as claimed in any of the preceding claims, **characterized in that** component (D) comprises fillers, optionally in surface-treated form, selected from the following group: talc, mica, silicate, quartz, titanium dioxide, wollastonite, kaolin, amorphous silicas, magnesium carbonate, magnesium hydroxide, chalk, lime, feldspar, barium sulfate, solid or hollow glass beads or ground glass, especially ground flat glass fibers, permanently magnetic or magnetizable metal compounds and/or alloys, and mixtures of the elements from this group.

19. The polyamide molding material as claimed in any of the preceding claims, **characterized in that** the proportion of component (E), more particularly the proportion of stabilizing additives, adds up to at most 1.0% by weight, preferably at most 0.5% by weight.

20. The polyamide molding material as claimed in any of the preceding claims, **characterized in that** the light transmission, determined at a wavelength of 600 nm, of a slab of thickness 2 mm produced from component (B) is at least 88%, preferably at least 90%.

21. A molding for delivery and/or storage of drinking water, especially at elevated temperatures, preferably in the region of or above 80°C, especially armature, fitting, housing, mixer, tap, filter housing, water meter, water meter component (bearing, propeller, pedestal), valve, valve component (housing, shutoff ball, vane, cylinder), distributor, cartridge, pump, pump component (e.g. paddle wheels, impellers), conduit or vessel, or constituent or element thereof, produced using a molding material as claimed in any of claims 1-17.

22. The molding as claimed in claim 21, **characterized in that** at least one region, preferably in the form of a coating or of a section, is exposed essentially directly to the drinking water when used as intended.

23. The use of a polyamide molding material as claimed in any of claims 1-20 for producing a molding, especially a component for delivering and/or storing drinking water, especially at elevated temperatures, preferably in the region of or above 80°C, especially armature, fitting, housing, mixer, tap, filter housing, water meter, water meter component (bearing, propeller, pedestal), valve, valve component (housing, shutoff ball, vane, cylinder), distributor, cartridge, pump, pump component (e.g. paddle wheels, impellers), conduit or vessel, or constituent or element thereof.

## Revendications

1. Masse de moulage en polyamide constituée par les constituants suivantes :
(A) 25-70% en poids de polyamide, aliphatique, choisi dans le groupe formé par PA1010, PA1012, PA1014, PA1210, PA1212, PA1214, PA12 et PA11 ou un mélange de deux de ces systèmes ou plus ;
(B) 8-35% en poids de polyamide transparent, choisi dans le groupe formé par MACM9-36, MACM9-36/PACM9-36, MACMI/12, MACMI/MACMT/12 ou un mélange de deux de ces systèmes ou plus ;
(C) 10-60% en poids d'agents de renforcement ;
(D) 0-30% en poids de charges sous forme de particules et/ou en couches ;
(E) 0 à 3% en poids d'adjuvants et/ou d'additifs où la somme des composants (A) - (E) vaut 100% en poids, et
où on utilise au moins partiellement comme substances de renforcement (C) des fibres dont la section transversale est soit circulaire ou pour lesquelles le rapport des dimensions de l'axe transversal principal et de l'axe transversal secondaire est inférieur à 2.

2. Masse de moulage en polyamide selon la revendication 1, **caractérisée en ce que**, pour le composant (A), il s'agit de PA12.

3. Masse de moulage en polyamide selon l'une quelconque des revendications précédentes, **caractérisée en ce qu'**il s'agit, pour le composant (B), de MACM12, MACM14, MACM16, MACM18, MACMI/12 ou MACMI/MACMT/12 ou d'un mélange de deux de ces systèmes ou plus.

4. Masse de moulage en polyamide selon l'une quelconque des revendications précédentes, **caractérisée en ce que** les fibres du composant (C) sont choisies dans le groupe : fibres de verre, fibres de carbone, fibres de bore, fibres d'aramide, fibres de basalte ou les mélanges de ces fibres.

5. Masse de moulage en polyamide selon l'une quelconque des revendications précédentes, **caractérisée en ce que** le composant (C) est principalement, de préférence de manière essentiellement complète, formé de fibres de verre de réalisation correspondante.

6. Masse de moulage en polyamide selon l'une quelconque des revendications précédentes, **caractérisée en ce que** le rapport du composant (A) au composant (B) dans la masse de moulage en polyamide est situé dans la plage de 2-5, de préférence dans la plage de 2,5-4.

7. Masse de moulage en polyamide selon l'une quelconque des revendications précédentes, **caractérisée en ce que** le polyamide (B) transparent présente une viscosité en solution (ηᵣₑₗ) entre 1,3 et 2,0, en particulier de préférence entre 1,40 et 1,85, et/ou une température de transition vitreuse T_{g} supérieure à 90°C, de préférence supérieure à 110°C, en particulier de préférence supérieure à 130°C.

8. Masse de moulage en polyamide selon l'une quelconque des revendications précédentes, **caractérisée en ce que** le polyamide (B) transparent est un polyamide et/ou un copolyamide microcristallin présentant une enthalpie de fusion dans la plage de 4-40 J/g, en particulier dans la plage de 4-25 J/g.

9. Masse de moulage en polyamide selon l'une quelconque des revendications précédentes, **caractérisée en ce que** le polyamide du composant (A), de préférence choisi sous forme de PA12, présente une viscosité en solution dans la plage de ηᵣₑₗ = 1,5 à 3,0, de préférence dans la plage de ηᵣₑₗ = 1, 6 à 2, 6, en particulier dans la plage de 1,6 à 2,0.

10. Masse de moulage en polyamide selon l'une quelconque des revendications précédentes, **caractérisée en ce que** le polyamide du composant (A), de préférence choisi sous forme de PA12, présente, jusqu'à une proportion de 50% en poids de fibres de verre, une viscosité en solution de ηᵣₑₗ = 1,8 à 2,0, et, pour des masses de moulage plus fortement renforcées, une viscosité en solution de ηᵣₑₗ = 1,6 à 1,8.

11. Masse de moulage en polyamide selon l'une quelconque des revendications précédentes, **caractérisée en ce que** le polyamide du composant (A), de préférence choisi sous forme de PA12, présente soit un rapport de groupes terminaux équilibré ou **en ce que** les groupes terminaux carboxy se trouvent en excès, la concentration en groupes terminaux amino se situant de préférence dans la plage de 5 à 70 mmoles/kg, de préférence dans la plage de 5 à 50 mmoles/kg et en particulier dans la plage de 5 à 30 mmoles/kg et/ou la concentration en groupe terminaux carboxy se trouvant de préférence dans la plage de 50 à 150 mmoles/kg, de préférence dans la plage de 60 à 120 mmoles/kg et de manière tout particulièrement préférée dans la plage de 60 à 90 mmoles/kg.

12. Masse de moulage en polyamide selon l'une quelconque des revendications précédentes, **caractérisée en ce que** le composant (A) se situe dans la plage de 30-50% en poids, de préférence dans la plage de 30-40% en poids, et **en ce que** le composant (B) se situe dans la plage de 8-28% en poids, de préférence dans la plage de 10-22% en poids.

13. Masse de moulage en polyamide selon l'une quelconque des revendications précédentes, **caractérisée en ce que** la somme des composants (A), (B) et (E) se situe dans la plage de 45-85% en poids, alors que la somme des composants (C) et (D) se situe dans la plage de 15 à 55% en poids.

14. Masse de moulage en polyamide selon l'une quelconque des revendications précédentes, **caractérisée en ce que** le composant (C) se trouve dans la plage de 25-55% en poids, de préférence dans la plage de 35-55% en poids, en particulier de préférence sous forme de fibres de verre.

15. Masse de moulage en polyamide selon l'une quelconque des revendications précédentes, **caractérisée en ce que** la masse de moulage de polyamide, lorsqu'elle est transformée en un corps moulé, est prévue pour l'entreposage ou le transport d'eau potable à température élevée, de préférence à des températures supérieures à 60°C, où la concentration totale en carbone organique dissous lors de la septième extraction ne dépasse en particulier de préférence pas une valeur de 12,5 mg de C/m²d.

16. Masse de moulage en polyamide selon l'une quelconque des revendications précédentes, **caractérisée en ce que** la masse de moulage en polyamide, lorsqu'elle est transformée en un corps moulé, est prévue pour l'entreposage ou le transport d'eau potable à des températures supérieures à 80°C, de préférence à des températures supérieures à 85°C±2°C, où la concentration totale en carbone organique dissous lors de la septième extraction ne dépasse en particulier de préférence pas une valeur de 12,5 mg de C/m²d.

17. Masse de moulage en polyamide selon l'une quelconque des revendications précédentes, **caractérisée en ce que** le mélange des composants (A) et (B) est au moins partiellement réticulé, avec ou sans addition d'un additif de réticulation, en particulier par une réticulation induite par des rayons, où il s'agit de préférence pour l'additif de réticulation de TAIC, en particulier en une proportion dans la plage de 1-5%.

18. Masse de moulage en polyamide selon l'une quelconque des revendications précédentes, **caractérisée en ce qu'**il s'agit, pour le composant (D), de charges, le cas échéant sous une forme traitée en surface, choisies dans le groupe suivant : talc, mica, silicate, quartz, dioxyde de titane, wollastonite, kaolin, silices amorphes, carbonate de magnésium, hydroxyde de magnésium, craie, calcaire, feldspath, sulfate de baryum, billes de verre pleines ou creuses ou verre broyé, en particulier fibres de verre broyées, plates, composés métalliques et/ou alliages magnétiques permanents ou magnétisables, ainsi que les mélanges des éléments de ce groupe.

19. Masse de moulage en polyamide selon l'une quelconque des revendications précédentes, **caractérisée en ce que** la proportion du composant (E), en particulier la proportion d'additifs de stabilisation, représente au plus 1,0% en poids, de préférence au plus 0,5% en poids.

20. Masse de moulage en polyamide selon l'une quelconque des revendications précédentes, **caractérisée en ce que** la transmission de la lumière, déterminée à une longueur d'onde de 600 nm, d'une plaque fabriquée à partir du composant (B) d'une épaisseur de 2 mm, est d'au moins 88%, de préférence d'au moins 90%.

21. Corps façonnés pour le transport et/ou la conservation d'eau potable, en particulier à des températures élevées, de préférence dans la plage de ou au-dessus de 80°C, en particulier la robinetterie, les raccords, les boîtiers, les mélangeurs, les robinets, les boîtiers de filtre, les compteurs d'eau, les composants des compteurs d'eau (paliers, hélices, axes), les soupapes, les composants de soupape (boîtiers, billes de blocage, tiroirs, cylindres), les répartiteurs, les cartouches, les pompes, les composants de pompes (par exemple roues à aubes, turbines), les conduites ou les récipients ou un constituant ou un élément de ceux-ci, fabriqués en utilisant une masse de moulage selon l'une quelconque des revendications 1-17.

22. Corps façonnés selon la revendication 21, **caractérisés en ce qu'**au moins une partie, de préférence sous forme d'un revêtement ou d'une section, est essentiellement directement soumise à l'eau potable lors d'une utilisation conforme.

23. Utilisation d'une masse de moulage en polyamide selon l'une quelconque des revendications 1-20 pour la fabrication d'un corps façonné, en particulier d'une pièce pour le transport et/ou la conservation d'eau potable, en particulier à des températures élevées, de préférence dans la plage de ou au-dessus de 80°C, en particulier la robinetterie, les raccords, les boîtiers, les mélangeurs, les robinets, les boîtiers de filtre, les compteurs d'eau, les composants des compteurs d'eau (paliers, hélices, axes), les soupapes, les composants de soupapes (boîtiers, billes de blocage, tiroirs, cylindres), les répartiteurs, les cartouches, les pompes, les composants de pompes (par exemple roues à aubes, turbines), les conduites ou les récipients ou un constituant ou un élément de ceux-ci.
